(19) Europäisches Patentamt
European Patent Office
Office européen des brevets

(11) Veröffentlichungsnummer: **0 281 964 B1**

(12) # EUROPÄISCHE PATENTSCHRIFT

(45) Veröffentlichungstag der Patentschrift: **28.11.90**

(51) Int. Cl.[5]: **D01F 9/10**, C08G 77/48, C08G 77/58

(21) Anmeldenummer: **88103395.5**

(22) Anmeldetag: **04.03.88**

(54) **Verfahren zur Herstellung von Siliciumcarbidfaser.**

(30) Priorität: **06.03.87 DE 3707225**

(43) Veröffentlichungstag der Anmeldung: **14.09.88 Patentblatt 88/37**

(45) Bekanntmachung des Hinweises auf die Patenterteilung: **28.11.90 Patentblatt 90/48**

(84) Benannte Vertragsstaaten: **AT BE CH DE FR GB IT LI NL**

(56) Entgegenhaltungen:
**EP-A- 0 051 855**
**EP-A- 0 175 217**

(73) Patentinhaber: **WACKER-CHEMIE GMBH, Prinzregentenstrasse 22, D-8000 München 22(DE)**

(72) Erfinder: **Frey, Volker, Dr. Dipl.-Chem., Jahnweg 5, D-8263 Burghausen(DE)**
Erfinder: **Pachaly, Bernd, Dr. Dipl.-Chem., Bachstrasse 16, D-8263 Burghausen(DE)**
Erfinder: **Zeller, Norbert, Dr. Dipl.-Chem., Schweitzerstrasse 5, D-8263 Burghausen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Siliciumcarbidfasern und Verfahren zu ihrer Herstellung aus metallorganischen Polymeren sind bekannt. Sie werden aus Polysilanen, Polycarbosilanen oder Polysilazanen hergestellt. Allen Verfahren gemeinsam ist das Verspinnen eines geeigneten Polymeren mit anschließender Pyrolyse unter Inertgas oder Vakuum.

Aufgabe der Erfindung ist die Herstellung von thermisch und chemisch beständigen Siliciumcarbidfasern mit hoher Zugfestigkeit.

Gegenstand der Erfindung ist ein Verfahren zur Herstellung von Siliciumcarbidfasern, das dadurch gekennzeichnet ist, daß ein Copolymer, erhalten durch Umsetzung mindestens eines Disilans der Formel
$R_2R^1Si_2(OCH_3)_3$
worin R gleiche oder verschiedene einwertige Alkyl-, Alkenyl- oder Arylgruppen und $R^1$ gleiche oder verschiedene, einwertige Alkylgruppen bedeutet, gegebenenfalls im Gemisch mit einer Verbindung der Formel
$R_2Si_2(OCH_3)_4$
worin R die oben dafür angegebene Bedeutung hat, mit mindestens einer Verbindung der Formel
$R_2R^2SiH$
worin R die oben dafür angegebene Bedeutung hat und $R^2$ die Methoxygruppe bedeutet oder die gleiche Bedeutung wie R hat, in Gegenwart von mindestens einer Verbindung der Formel
MOR
worin R die oben dafür angegebene Bedeutung hat und M ein Alkalimetall bedeutet,
und einer Verbindung der Formel

$$HO\{(R^1R^3SiO)_x(R^1_2SiO)_y\}_nH$$

worin $R^1$ die oben dafür angegebene Bedeutung hat, $R^3$ gleiche oder verschiedene Alkenylgruppen bedeutet, x innerhalb des Bereiches von 0,5-1,5, y innerhalb des Bereiches von 3-5 und n innerhalb des Bereiches von 500-2000 liegt, zu Fasern versponnen wird und unter inerter Atmosphäre oder im Vakuum bei Temperaturen im Bereich von 800-1300°C umgesetzt wird.

Bei einer bevorzugten Ausführungsform des erfindungsgemäßen Verfahrens wird dem Copolymer, erhalten durch Umsetzung mindestens eines Disilans der Formel
$R_2R^1Si_2(OCH_3)_3$
worin R gleiche oder verschiedene einwertige Alkyl-, Alkenyl- oder Arylgruppen und $R^1$ gleiche oder verschiedene, einwertige Alkylgruppen bedeutet, gegebenenfalls im Gemisch mit einer Verbindung der Formel
$R_2Si_2(OCH_3)_4$
worin R die oben dafür angegebene Bedeutung hat, mit mindestens einer Verbindung der Formel
$R_2R^2SiH$
worin R die oben dafür angegebene Bedeutung hat und $R^2$ die Methoxygruppe bedeutet oder die gleiche Bedeutung wie R hat, in Gegenwart von mindestens einer Verbindung der Formel
MOR
worin R die oben dafür angegebene Bedeutung hat und M ein Alkalimetall bedeutet,
und einer Verbindung der Formel

$$HO\{(R^1R^3SiO)_x(R^1_2SiO)_y\}_nH$$

worin $R^1$ die oben dafür angegebene Bedeutung hat, $R^3$ gleiche oder verschiedene Alkenylgruppen bedeutet, x innerhalb des Bereiches von 0,5-1,5, y innerhalb des Bereiches von 3-5 und n innerhalb des Bereiches von 500-2000 liegt,
eine Verbindung oder ein Gemisch der Verbindungen der Formeln

$$\{(R^1_3SiO)_a(R^1_2R^3SiO)_b(SiO_2)_c\}_d$$

$$R^3R^1_2Si\{R^1_2SiO\}_eOSiR^1_2R^3$$

und

$$R^1O\{(R^1O)_2TiO\}_fTi(OR^1)_3$$

worin $R^1$ und $R^3$ die oben dafür angegebene Bedeutung haben, a innerhalb des Bereiches von 0,3-0,5, b innerhalb des Bereiches von 0,01-0,1, c innerhalb des Bereiches von 0,5-0,7, d innerhalb des Bereiches von 10-100, e innerhalb des Bereiches von 500-600 und f innerhalb des Bereiches von 1-1000 liegt, zugesetzt, das so erhaltene Produkt zu Fasern versponnen und unter inerter Atmosphäre oder im Vakuum bei Temperaturen im Bereich von 800-1300°C umgesetzt.

Vorzugsweise enthalten Alkylgruppen R, $R^1$ und $R^2$ jeweils 1 bis 12 Kohlenstoffatome je Rest, wie der Methyl-, Ethyl-, n-Propyl-, Isopropyl-, n-Butyl-, sec.-Butyl und 2-Ethylhexylrest, sowie Dodecylreste. Beispiele für Arylreste R und $R^2$ sind der Phenylrest und Xenylreste. Insbesondere wegen der leichten Zugänglichkeit sind als Alkylgruppen R, $R^1$ und $R^2$ Methylgruppen bevorzugt. Das wichtigste Beispiel für eine Alkylenylgruppe R oder $R^3$ ist die Vinylgruppe.

Als weiteres Beispiel für einen Rest R in der Verbindung der Formel
MOR
sei der tert.-Butylrest genannt.
Das Alkalimetall kann Lithium, Natrium, Kalium, Rubidium oder Cäsium sein. Bevorzugt als Alkalimetall in der Verbindung der Formel
MOR
sind Natrium und Kalium.

Beispiele für bevorzugte Disilane sind 1,1,2-Trimethyl-1,2,2-trimethoxydisilan 1-Phenyl-1,2-dimethyl-1,2,2-trimethoxydisilan und 1-Vinyl-1,2-dimethyl-1,2,2-trimethoxydisilan. Das wichtigste Beispiel für eine Verbindung der Formel
$R_2Si_2(OCH_3)_4$
ist 1,2-Dimethyl-1,1,2,2-tetramethoxydisilan.

Die Herstellung derartiger Silane ist bekannt, z.B. durch E. Hengge et al. in "Monatshefte für Chemie" Band 105, (1974), Seite 671 bis 683, W.H. Atwell et al. in "Journal of Organometallic Chemistry", Band 7, (1967), Seite 71 bis 78, E. Hengge et al. in "Monatshefte für Chemie", Band 99, (1968), Seite 340 bis 346, und H. Watanabe et al. in "Journal of Organometallic Chemistry", Band 128 (1977), Seite 173 bis 175.

Werden Disilane der Formel
$R_2Si_2(OCH_3)_4$
mitverwendet, werden sie vorzugsweise in Mengen von 0,5Mol bis 1,5Mol je Mol Disilan der Formel
$R_2R^1Si_2(OCH_3)_3$
eingesetzt.

Beispiele fur Verbindungen der Formel
$R_2R^2SiH$
die bevorzugt eingesetzt werden, sind Dimethylmethoxysilan und Diphenylmethylsilan.

Vorzugsweise wird Verbindung der Formel
$R_2R^2SiH$
in Mengen von 0,5 bis 5 Gewichtsprozent, insbesondere 2 bis 4 Gewichtsprozent, jeweils bezogen auf das Gewicht der jeweils eingesetzten Menge an Disilan, verwendet.

Wichtige Beispiele für Verbindungen der Formel
MOR
sind Natriummethylat und Kaliumtert.-butylat.

Verbindung der Formel
MOR
dient als Katalysator. Vorzugsweise wird sie in Mengen von 0,2 bis 0,5 Gewichtsprozent, bezogen auf das Gewicht der jeweils eingesetzten Menge an Disilan, verwendet.

Bei bevorzugten Verbindungen der Formel

$$HO\{(R^1R^3SiO)_x(R^1_2SiO)_y\}_nH$$

ist $R^1$ ein Methylrest, $R^3$ ein Vinylrest, x im Bereich von 0,5-1,5, y im Bereich von 3-5 und n im Bereich von 500-2000.

Die Herstellung derartiger Verbindungen ist bekannt, z.B. aus W. Noll, Chemistry and Technology of Silicones, Academic Press Inc., London, 1968.

Vorzugsweise werden beim erfindungsgemäßen Verfahren 0,1-10 Gew.-%, insbesondere 1-5 Gew.-% der Verbindung der Formel

$$HO\{(R^1R^3SiO)_x(R^1_2SiO)_y\}_nH$$

bezogen auf das Gewicht der eingesetzten Disilane, zugegeben.

Die Umsetzung mindestens eines Disilans der Formel
$R_2R^1Si_2(OCH_3)_3$
worin R gleiche oder verschiedene einwertige Alkyl-, Alkenyl- oder Arylgruppen und $R^1$ gleiche oder verschiedene, einwertige Alkylgruppen bedeutet, gegebenenfalls im Gemisch mit einer Verbindung der Formel
$R_2Si_2(OCH_3)_4$
worin R die oben dafür angegebene Bedeutung hat, mit mindestens einer Verbindung der Formel
$R_2R^2SiH$

worin R die oben dafür angegebene Bedeutung hat, und $R^2$ die Methoxygruppe bedeutet oder die gleiche Bedeutung wie R hat, in Gegenwart von mindestens einer Verbindung der Formel
MOR
worin R die oben dafür angegebene Bedeutung hat und M ein Alkalimetall bedeutet,
mit einer Verbindung der Formel

$$HO\{(R^1R^3SiO)_x(R^1_2SiO)_y\}_nH$$

worin $R^1$ die oben dafür angegebene Bedeutung hat, $R^3$ gleiche oder verschiedene Alkenylgruppen bedeutet, x innerhalb des Bereiches von 0,5-1,5, y innerhalb des Bereiches von 3-5 und n innerhalb des Bereiches von 500-2000 liegt,
erfolgt nach Vermischen der Reaktionsteilnehmer und Katalysator bei Temperaturen von vorzugsweise 25°C bis 220°C und ist beendet, wenn kein monomeres Organomethoxysilan mehr abdestilliert. Vorzugsweise wird diese Umsetzung beim Druck der umgebenden Atmosphäre, also bei 1020 hPa (abs.) oder etwa 1020 hPa (abs.), durchgeführt.

Bei Beispielen für bevorzugte Verbindungen der Formel

$$\{(R^1_3SiO)_a(R^1_2R^3SiO)_b(SiO_2)_c\}_d$$

ist $R^1$ ein Methylrest, $R^3$ ein Vinylrest, a im Bereich von 0,3-0,4, b im Bereich von 0,01-0,1, c im Bereich von 0,5-0,7 und d im Bereich von 10-100.
Die Herstellung derartiger Verbindungen ist bekannt, z.B. aus W. Noll, Chemistry and Technology of Silicones, Academic Press Inc., London, 1968.

Vorzugsweise werden 0,1-10 Gew.-%, insbesondere 1-3 Gew.-% der Verbindung der Formel

$$\{(R^1_3SiO)_a(R^1_2R^3SiO)_b(SiO_2)_c\}_d,$$

bezogen auf das Gewicht der eingesetzten Disilane, zugesetzt.

Bei Beispielen für bevorzugte Verbindungen der Formel

$$R^3R^1_2Si\{R^1_2SiO\}_eOSiR^1_2R^3$$

ist $R^1$ ein Methylrest, $R^3$ ein Vinylrest und e im Bereich von 500-600.
Die Herstellung derartiger Verbindungen ist bekannt, z.B. aus W. Noll, Chemistry and Technology of Silicones, Academic Press Inc., London, 1968.

Vorzugsweise werden 0,1-10 Gew.-%, insbesondere 2-5 Gew.-% der Verbindung der Formel

$$R^3R^1_2Si\{R^1_2SiO\}_eOSiR^1_2R^3,$$

bezogen auf das Gewicht der eingesetzten Disilane, zugesetzt.

Bei Beispielen für bevorzugte Verbindungen der Formel

$$R^1O\{(R^1O)_2TiO\}_fTi(OR^1)_3$$

ist $R^1$ ein Butylrest und f im Bereich von 1-1000.

Die Herstellung derartiger Verbindungen ist bekannt, z.B. aus D.C. Bradley, R.C. Mehrotra und D.P. Gaur, Metal Alkoxides, Academic Fress Inc., London 1978.

Vorzugsweise werden 0,1-10 Gew.-%, insbesondere 1-3 Gew.-% der Verbindung der Formel

$$R^1O\{(R^1O)_2TiO\}_fTi(OR^1)_3,$$

bezogen auf das Gewicht der eingesetzten Disilane, zugesetzt.

Die Umsetzung des Copolymeren, erhalten durch Umsetzung mindestens eines Disilans der Formel
$R_2R^1Si_2(OCH_3)_3$
worin R gleiche oder verschiedene einwertige Alkyl-, Alkenyl- oder Arylgruppen und $R^1$ gleiche oder verschiedene, einwertige Alkylgruppen bedeutet, gegebenenfalls im Gemisch mit einer Verbindung der Formel
$R_2Si_2(OCH_3)_4$

worin R die oben dafür angegebene Bedeutung hat, mit mindestens einer Verbindung der Formel
$R_2R^2SiH$
worin R die oben dafür angegebene Bedeutung hat und $R^2$ die Methoxygruppe bedeutet oder die gleiche Bedeutung wie R hat, in Gegenwart von mindestens einer Verbindung der Formel
MOR
worin R die oben dafür angegebene Bedeutung hat und M ein Alkalimetall bedeutet,
mit einer Verbindung der Formel

$$HO\!\!-\!\!(R^1R^3SiO)_x(R^1_2SiO)_y\!\!-\!\!)_nH$$

worin $R^1$ die oben dafür angegebene Bedeutung hat, $R^3$ gleiche oder verschiedene Alkenylgruppen bedeutet, x innerhalb des Bereiches von 0,5-1,5, y innerhalb des Bereiches von 3-5 und n innerhalb des Bereiches von 500-2000 liegt,
mit einer Verbindung oder einem Gemisch der Verbindungen der Formeln

$$-\!\!(\,(R^1_3SiO)_a(R^1_2R^3SiO)_b(SiO_2)_c\,)\!\!-_d$$

$$R^3R^1_2Si\!\!-\!\!(R^1_2SiO)\!\!-_eOSiR^1_2R^3$$

und $$R^1O\!\!-\!\!(\,(R^1O)_2TiO\,)\!\!-_fTi(OR^1)_3$$

worin $R^1$ und $R^3$ die oben dafür angegebene Bedeutung haben, a innerhalb des Bereiches von 0,3-0,5, b innerhalb des Bereiches von 0,01-0,1, c innerhalb des Bereiches von 0,5-0,7, d innerhalb des Bereiches von 10-100, e innerhalb des Bereiches von 500-600 und f innerhalb des Bereiches von 1-1000 liegt, erfolgt nach Vermischen der Reaktionsteilnehmer bei Temperaturen von vorzugsweise 50°C bis 150°C in Gegenwart eines organischen Lösungsmittels. Vorzugsweise wird diese Umsetzung beim Druck der umgebenden Atmosphäre, also bei 1020 hPa (abs.) oder etwa 1020 hPa (abs.), durchgeführt.

Beispiele für organische Lösungsmittel sind organische, aromatische oder aliphatische Kohlenwasserstoffe. Insbesondere werden Toluol, Xylol oder Petrolether verschiedener Siedefraktionen verwendet.

Die erfindungsgemäßen Siliciumcarbidfasern werden durch bekannte Spinnverfahren, wie Trockenspinnen, Naßspinnen oder Schmelzspinnen, vorzugsweise jedoch durch Schmelzspinnverfahren gewonnen. Hierbei werden aus der Schmelze Fasern mit einem mittleren Durchmesser von 5-50µm versponnen und durch Einwirkung von Wärme, Licht, wie beispielsweise UV-Licht, Wasserdampf und/oder Luftsauerstoff vernetzt. Die unschmelzbaren Fasern werden zu einem Faserbündel mit 10-1000 Einzelfäden (Filamenten) gebündelt und in einem Röhrenofen bei 800-1300°C, vorzugsweise 1050-1150°C unter inerter Atmosphäre, beispielsweise erhalten durch Spülen mit Inertgas wie Argon oder Stickstoff, oder im Vakuum umgesetzt.

Die Zugfestigkeit der erfindungsgemäßen Siliciumcarbidfasern liegt bei einem 50µm Faden bei $300N/mm^2$ und bei einem 10µm Faden bei $3000N/mm^2$.

Siliciumcarbidfasern finden hauptsächlich Anwendung in Faserverbundwerkstoffen, vorzugsweise Metallen wie Aluminium und Titan oder keramischen Materialien wie Siliciumcarbid.

Beispiel 1

Herstellung des Copolymeren

Ein Gemisch aus 600g (2,85 mol) 1,2-Dimethyl-1,1,2,2-tetramethoxydisilan, 900g (4,90 mol) 1,1,2-Trimethyl-1,2,2-trimethoxydisilan, 40,5g (2,7 Gew.-% bezogen auf das Gesamtgewicht der Disilane) Dimethylmethoxysilan und 60g Vinylsiloxan der Formel

$$HO\!\!-\!\!(\,(ViMeSiO)(Me_2SiO)_4\,)\!\!-_nH$$

mit einem mittleren Molekulargewicht von 125000 g/mol erwärmte sich nach Zugabe von 6,0g (0,4 Gew.-% bezogen auf das Gesamtgewicht der Disilane) Natriummethylat rasch von 25°C auf 90°C. Dann wurde das Gemisch auf 200°C erwärmt, wobei 1115g eines Gemisches aus Dimethyldimethoxysilan und Methyltrimethoxysilan abdestillierten. Es wurden 490g Rückstand erhalten.

Beispiel 2

Herstellung von Siliciumcarbidfaser

Eine Lösung von 430g des in Beispiel 1 hergestellten Copolymeren in 430g Toluol wurden mit einem Gemisch aus 42,6g vinylendständigem Dimethylpolysiloxan (mittleres Molekulargewicht 40000), 21,9g Vinylwasserglas und 21,5g Polytitanbutylat versetzt. Anschließend wurde 60min unter Rückfluß erhitzt. Danach wurde die Lösung bei 250°C und 5mbar durch einen Dünnschichtverdampfer gegeben. Es wurden 435g eines blaugrauen, klebfreien Polymeren erhalten. Das Material ist löslich, schmelzbar (Erweichungspunkt 100°C) und weist ein mittleres Molekulargewicht von 2500g/mol auf.
In einer Schmelzspinnvorrichtung mit 300µm-Düse wurde dieses Polymer bei 120°C und 10bar Argondruck versponnen, wobei die Abzugsgeschwindigkeit 60m/min betrug. Bei Austritt aus der Spinndüse waren die Fasern graublau und nicht transparent. Die Fasern wurden dann durch eine 30cm lange Wärmezone (Temperatur etwa 100°C und vorbei an einem UV-Punktstrahler geführt, wobei sie farblos und transparent wurden. Die so erhaltenen Fasern zeigten gute Reißfestigkeit und Flexibilität und wurden zu einem Garn mit 50 Filamenten gebündelt.

Diese Faserbündel wurden unter einer Zugspannung von 50g/mm² in einem Röhrenofen mit Argonspülung auf 1300°C aufgeheizt. Nach 30min Haltezeit bei 1300°C wurden die Fasern aus dem Ofen gezogen. Der Gewichtsverlust bei der Pyrolyse betrug 18-20 Gew.-%. Die Fasern sind glänzend-schwarz, zeigen gute Flexibilität und eine Zugfestigkeit von max. 2700N/mm² bei einem mittleren Durchmesser von 10-20µm.

**Patentansprüche**

1. Verfahren zur Herstellung von Siliciumcarbidfasern, dadurch gekennzeichnet, daß ein Copolymer, erhalten durch Umsetzung mindestens eines Disilans der Formel
$R_2R^1Si_2(OCH_3)_3$
worin R gleiche oder verschiedene einwertige Alkyl-, Alkenyl- oder Arylgruppen und $R^1$ gleiche oder verschiedene, einwertige Alkylgruppen bedeutet, gegebenenfalls im Gemisch mit einer Verbindung der Formel
$R_2Si_2(OCH_3)_4$
worin R die oben dafür angegebene Bedeutung hat, mit mindestens einer Verbindung der Formel
$R_2R^2SiH$
worin R die oben dafür angegebene Bedeutung hat und $R^2$ die Methoxygruppe bedeutet oder die gleiche Bedeutung wie R hat, in Gegenwart von mindestens einer Verbindung der Formel
MOR
worin R die oben dafür angegebene Bedeutung hat und M ein Alkalimetall bedeutet,
und einer Verbindung der Formel

$$HO\{(R^1R^3SiO)_x(R^1_2SiO)_y\}_nH$$

worin $R^1$ die oben dafür angegebene Bedeutung hat, $R^3$ gleiche oder verschiedene Alkenylgruppen bedeutet, x innerhalb des Bereiches von 0,5-1,5, y innerhalb des Bereiches von 3-5 und n innerhalb des Bereiches von 500-2000 liegt, zu Fasern versponnen wird und unter inerter Atmosphäre oder im Vakuum bei Temperaturen im Bereich von 800-1300°C umgesetzt wird.

2. Verfahren nach Anspruch 1, dadurch gekennzeichnet, daß dem Copolymeren, erhalten durch Umsetzung mindestens eines Disilans der Formel
$R_2R^1Si_2(OCH_3)_3$
worin R gleiche oder verschiedene einwertige Alkyl-, Alkenyl- oder Arylgruppen und $R^1$ gleiche oder verschiedene, einwertige Alkylgruppen bedeutet, gegebenenfalls im Gemisch mit einer Verbindung der Formel
$R_2Si_2(OCH_3)_4$
worin R die oben dafür angegebene Bedeutung hat, mit mindestens einer Verbindung der Formel
$R_2R^2SiH$
worin R die oben dafür angegebene Bedeutung hat und $R^2$ die Methoxygruppe bedeutet oder die gleiche Bedeutung wie R hat, in Gegenwart von mindestens einer Verbindung der Formel
MOR
worin R die oben dafür angegebene Bedeutung hat und M ein Alkalimetall bedeutet,
und einer Verbindung der Formel

$$HO\{(R^1R^3SiO)_x(R^1_2SiO)_y\}_nH$$

worin $R^1$ die oben dafür angegebene Bedeutung hat, $R^3$ gleiche oder verschiedene Alkenylgruppen bedeutet, x innerhalb des Bereiches von 0,5-1,5, y innerhalb des Bereiches von 3-5 und n innerhalb des Bereiches von 500-2000 liegt,
eine Verbindung oder ein Gemisch der Verbindungen der Formeln

$$-\!\!\left(-(R^1_3SiO)_a(R^1_2R^3SiO)_b(SiO_2)_c-\right)\!\!-_d$$
$$R^3R^1_2Si-(-R^1_2SiO-)_e-OSiR^1_2R^3$$
und $$R^1O-(-(R^1O)_2TiO-)_f-Ti(OR^1)_3$$

worin $R^1$ und $R^3$ die oben dafür angegebene Bedeutung haben, a innerhalb des Bereiches von 0,3-0,5, b innerhalb des Bereiches von 0,01-0,1, c innerhalb des Bereiches von 0,5-0,7, d innerhalb des Bereiches von 10-100, e innerhalb des Bereiches von 500-600 und f innerhalb des Be reiches von 1-1000 liegt, zugesetzt wird, das so erhaltene Produkt zu Fasern versponnen und unter inerter Atmosphäre oder im Vakuum bei Temperaturen im Bereich von 800-1300°C umgesetzt wird.

**Claims**

1. A process for the production of silicon carbide fibers, which comprises spinning a copolymer obtained by reacting at least one disilane of the formula
$R_2R^1Si_2(OCH_3)_3$
in which R denotes identical or different monovalent alkyl, alkenyl or aryl groups and $R^1$ denotes identical or different monovalent alkyl groups, if appropriate mixed with a compound of the formula
$R_2Si_2(OCH_3)_4$
in which R has the meaning given above for this radical, with at least one compound of the formula
$R_2R^2SiH$
in which R has the meaning given above for this radical and $R^2$ denotes the methoxy group or has the same meaning as R, in the presence of at least one compound of the formula
MOR
in which R has the meaning given above for this radical and M denotes an alkali metal, and a compound of the formula

$$HO-(-(R^1R^3SiO)_x(R^1_2SiO)_y-)_n-H$$

in which $R^1$ has the meaning given above for this radical, $R^3$ denotes identical or different alkenyl groups, x lies within the range from 0.5 to 1.5, y lies within the range from 3 to 5 and n lies within the range from 500 to 2000, to fibers and reacting the fibers under an inert atmosphere or in vacuo at temperatures in the range from 800 to 1300°C.

2. The process as claimed in claim 1, which comprises adding to the copolymer obtained by reacting at least one disilane of the formula
$R_2R^1Si_2(OCH_3)_3$
in which R denotes identical or different monovalent alkyl, alkenyl or aryl groups and $R^1$ denotes identical or different monovalent alkyl groups, if appropriate mixed with a compound of the formula
$R_2Si_2(OCH_3)_4$
in which R has the meaning given above for this radical, with at least one compound of the formula
$R_2R^2SiH$
in which R has the meaning given above for this radical and $R^2$ denotes the methoxy group or has the same meaning as R, in the presence of at least one compound of the formula
MOR
in which R has the meaning given above for this radical and M denotes an alkali metal, and a compound of the formula

$$HO-(-(R^1R^3SiO)_x(R^1_2SiO)_y-)_n-H$$

in which $R^1$ has the meaning given above for this radical, $R^3$ denotes identical or different alkenyl groups, x lies within the range from 0-5 to 1.5, y lies within the range from 3 to 5 and n lies within the range from 500 to 2000, a compound or a mixture of compounds of the formulae

$$-\!\!\left(-(R^1_3SiO)_a(R^1_2R^3SiO)_b(SiO_2)_c-\right)\!\!-_d$$
$$R^3R^1_2Si-(-R^1_2SiO-)_e-OSiR^1_2R^3$$
and $$R^1O-(-(R^1O)_2TiO-)_f-Ti(OR^1)_3$$

in which $R^1$ and $R^3$ have the meanings given above for these radicals, a lies within the range from 0.3 to 0.5, b lies within the range from 0.01 to 0.1, c lies within the range from 0.5 to 0.7, d lies within the range from 10 to 100, e lies within the range from 500 to 600 and f lies within the range from 1 to 1,000, spinning the product thus obtained to give fibers and reacting these under an inert atmosphere or in vacuo at temperatures in the range from 800 to 300°C.

**Revendications**

1. Procédé pour la préparation de fibres en carbure de silicium, caractérisé en ce qu'un copolymère, obtenu par la réaction d'au moins un disilane de formule

$R_2R^1Si_2(OCH_3)_3$

dans laquelle les radicaux R sont des groupes alkyle, alcényle ou aryle monovalents, identiques ou différents, et $R^1$ représente des groupes alkyle monovalents identiques ou différents, éventuellement en mélange avec un composé de formule

$R_2Si_2(OCH_3)_4$

dans laquelle R a la signification donnée ci-dessus, avec au moins un composé de formule

$R_2R^2SiH$

dans laquelle R a la signification donnée ci-dessus et $R^2$ est le groupe méthoxy, ou a la même signification que R, en présence d'au moins un composé de formule

MOR

dans laquelle R a la signification donnée ci-dessus et M est un métal alcalin, et avec un composé de formule

$$HO\{(R^1R^3SiO)_x(R_2{}^1SiO)_y\}_nH$$

dans laquelle $R^1$ a la signification donnée ci-dessus, $R^3$ représente des groupes alcényle identiques ou différents, x est compris entre 0,5 et 1,5, y est compris entre 3 et 5 et n est compris entre 500 et 2000, est filé pour donner des fibres et, sous atmosphère inerte ou sous vide, est mis à réagir à des températures de 800-1300°C.

2. Procédé selon la revendication 1, caractérisé en ce qu'on ajoute au copolymère obtenu par la réaction d'au moins un disilane de formule

$R_2R^1Si_2(OCH_3)_3$

dans laquelle les radicaux R sont des groupes alkyle, alcényle ou aryle monovalents, identiques ou différents, et $R^1$ représente des groupes alkyle monovalents identiques ou différents, éventuellement en mélange avec un composé de formule

$R_2Si_2(OCH_3)_4$

dans laquelle R a la signification donnée ci-dessus, avec au moins un composé de formule

$R_2R^2SiH$

dans laquelle R a la signification donnée ci-dessus et $R^2$ est le groupe méthoxy, ou a la même signification que R, en présence d'au moins un composé de formule

MOR

dans laquelle R a la signification donnée ci-dessus et M est un métal alcalin, et avec un composé de formule

$$HO\{(R^1R^3SiO)_x(R_2{}^1SiO)_y\}_nH$$

dans laquelle $R^1$ a la signification donnée ci-dessus, $R^3$ représente des groupes alcényle identiques ou différents, x est compris entre 0,5 et 1,5, y est compris entre 3 et 5 et n est compris entre 500 et 2000, un composé ou un mélange des composés de formules

$$\{(R^1_3SiO)_a(R^1_2R^3SiO)_b(SiO_2)_c\}_d$$

$$R^3R^1_2Si\{R^1_2SiO\}_eOSiR^1_2R^3$$

et $$R^1O\{(R^1O)_2TiO\}_fTi(OR^1)_3$$

dans lesquelles $R^1$ et $R^3$ ont les significations données cidessus, a est compris entre 0,3 et 0,5, b est compris entre 0,01 et 0,1, c est compris entre 0,5 et 0,7, d est compris entre 10 et 100, e est compris entre 500 et 600, et f est compris entre 1 et 1000, on file le produit ainsi obtenu pour donner des fibres, et on le fait réagir sous atmosphère inerte ou sous vide à des températures de 800-1300°C.